# EUROPEAN PATENT APPLICATION

(11) **EP 0 933 944 A2**
(43) Date of publication of application: **04.08.1999**
(21) Application number: 99101353.3
(22) Date of filing: 26.01.1999
(51) Int. Cl.: H04N 7/26

(54) **Digital signal processing**

(30) Priority: 03.02.1998 GB 9802235
(71) Applicant: NDS LIMITED, West Drayton, Middlesex UB7 ODQ (GB)
(72) Inventor: Davies, Colin, Hale, Fordingbridge, Hampshire SP6 2NS (GB)
(74) Representative: Stoakes, Rosemarie Clare

(57) **Abstract**

The present invention relates to the process of matching a multi-dimensional basis function to a digital signal representing an image.

The multidimensional basis function is separable into one-dimensional basis functions along two co-ordinate axes so that the image can be correlated with the one dimensional basis functions along each co-ordinate axis. The process of correlation is thus simplified. The range of possibilities for the multidimensional basis function is extended by allowing the axes of the basis function to be angularly displaced relative to the axes of the image. The basis function is rotated through an angle which brings the basis function into alignment with the axes of the image so that the basis function can be separated into the one dimensional basis functions along the image axes. The image is rotated through the same angle. The correlation is then effected using the single dimensional basis functions into which the multidimensional basis function can be separated.

## Description

This invention relates to improvements in or relating to the processing of digital signals, for example broadcast digital signals.

Broadcasting of digital signals is now a well-established technology. Information in the digital domain can undergo a number of signal processing processes which essentially compress the amount of data that needs to be transmitted. For example in Digital Television it is possible to compress the signal such that less than 1% of the required information needs to be transmitted. This means that many Digital Television channels can be transmitted in the same bandwidth that would previously be used for only one analogue television channel.

There are a number of well-known techniques for compressing digital data; these include the MPEG II standard for digital compression and wavelet compression techniques. A problem that exists with this type of signal processing is to find a numerical representation of signals that is well suited for performing the processes of coding, noise removal, feature enhancement or pattern recognition. It is desirable to decompose the signals into basis elements that are locally adapted to the signal structures and frequency content. The classical methods identified above build signal representations with linear transforms. These transforms build signal representations that are not adapted to the local signal properties.

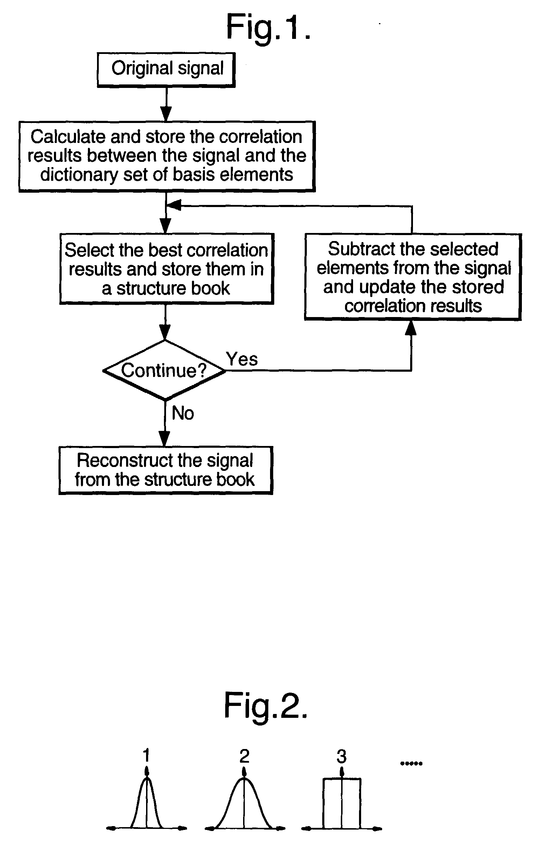

Matching pursuits is an alternative method of decomposing a signal into elementary structures that are locally adapted to the local signal properties. Matching pursuits has excellent performance when compared with other compression techniques. Matching pursuits performs signal analysis using an arbitrary over-complete dictionary set of basis waveforms. With a complete set of basis waveforms it is possible to completely represent a given signal by a unique linear combination of the waveforms. With an over-complete basis set there may be many different combinations of the basis waveforms which can represent the same given signal. This means that the most appropriate representation can be chosen for different circumstances.
The iterative process of decomposing a signal with the elementary structures of the dictionary basis set is shown in the block diagram of Figure1 and described by the steps below.
1. The algorithm initialises by calculating and storing the correlation results between the signal and the dictionary set of basis waveforms.
2. The data for one or more of the best correlation results is stored in a structure codebook.
3. A decision is made as to whether to continue coding. For compression purposes this may be based on whether a given bit budget has been reached.
4. If the decision is yes then the selected correlation elements of step 2 are subtracted from the original signal and the stored correlation results are updated. The process then loops back to step 2.
5. If the decision is no then the signal can be reconstructed from the stored structure book.

For a typical signal compression system the stored matching pursuits structure book will be efficiently coded and stored or transmitted to a decoder. Figure 2 shows some waveforms (1, 2 and 3) from an example one-dimensional basis dictionary (not shown) for analysis of a time varying signal. In the one-dimensional basis dictionary the waveforms can be located anywhere in time.

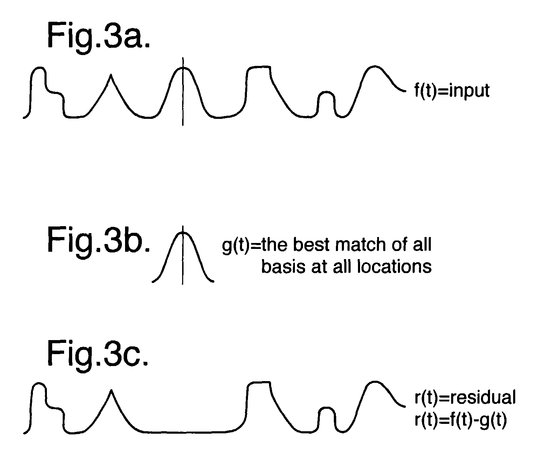

Application of the example dictionary set to an example function f(t) is shown in Figure 3a. After correlating the signal and the dictionary set of basis waveforms the best match correlation g(t) shown in Figure 2 is chosen (Figure 3b). The correlation coefficient, basis waveform and location in time are stored in the structure codebook. The stored element is subtracted from the original signal to generate the residual r(t) shown in Figure 3c. The process iterates by finding the best correlation result of the residual signal and the dictionary set of basis waveforms.

It is desirable to be able to model and represent multi-dimensional data by sets of multi-dimensional basis functions because a multi-dimensional basis function may provide a better correlation than one-dimensional functions.

For speed of implementation and convenience of design, the multi-dimensional basis functions may be selected to be separable into one dimensional basis functions in orthogonal directions. The representation of the multi-dimensional data can then be treated as a series of one-dimensional problems.

However, using basis functions that are separable with respect to the orthogonal axes of the multi-dimensional data, limits the choice of multi-dimensional basis functions. Multi-dimensional basis functions that are not separable with respect to the axes of the particular data may provide the best solution to modelling that data. A problem has existed in calculating correlation results for basis functions that are not separable into one-dimensional functions along the data axes because of the intractable nature of the computation.

According to one aspect of the present invention there is provided a method of matching a multi-dimensional basis function to a digital signal, the method comprising the steps of:
determining an angular orientation of the basis function relative to preset axes; and
rotating the basis function into alignment with the preset axes and correlating the rotated basis function with the signal.

Reference will now be made, by way of example, to the accompanying drawings, in which:
Figure 1 is a prior art block diagram illustrating signal decomposition using matching pursuits;
Figure 2 is a diagram showing example elements from a one dimensional basis dictionary for analysis of time varying signals for use in the Matching pursuits technique in Figure 1;
Figure 3 is a visualisation of the first iteration of Matching Pursuits encoding of an example signal using the basis dictionary set of Figure 2;
Figure 4 is a visual representation of an example over complete dictionary set of dimensional waveforms
Figure 5 is a representation of a basis function separable along two axes displaced from an image axis.
Figure 6 is a representation of the basis function of Figure 5 after rotation into alignment with the image axis.

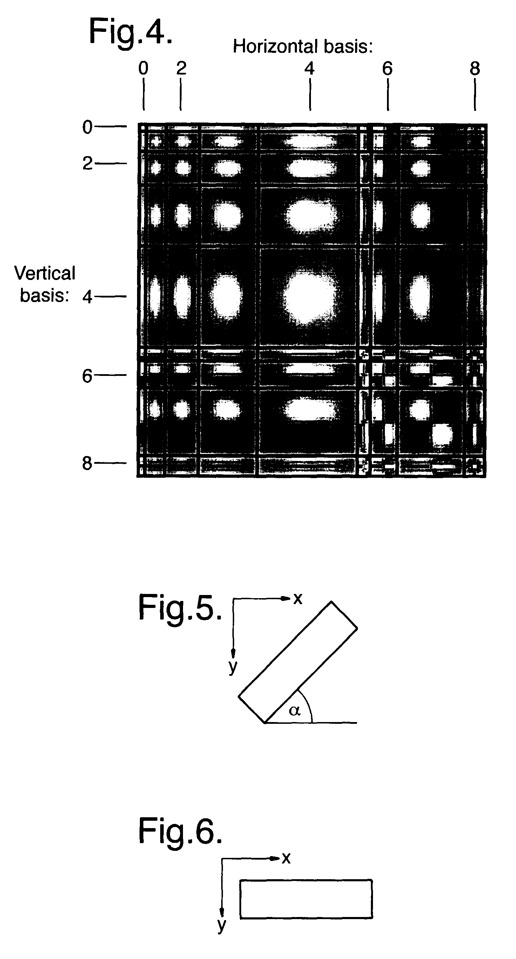

Figure 4 shows a typical dictionary set of functions used in Matching Pursuits. It can be seen that these functions are represented as a plurality of optical features some of which are texture features, some edge features and some shape features. Each of the features can be represented mathematically as a two-dimensional set of one-dimensional functions. Examples of such functions are shown in the prior art Figure 2. It will be clear that each feature in Figure 4 can be represented in a similar manner.

The multi-dimensional basis function shown in Figure 4 is separable into one-dimensional functions along the horizontal and vertical orthogonal axes. The multi-dimensional data which is to be correlated with the basis function is also oriented along the same horizontal and vertical axes. As a result the correlation is reduced to matching the separable one-dimensional basis functions along the x and y axes separately.

In Figure 5 there is shown in outline from a two-dimensional basis function which is disposed at an angle and with respect to the x and y axes of multi-dimensional data which represents an image. If the area of the basis function in Figure 5 is equal to 40x10 = 400 locations, the correlation calculation at each image location would require four hundred multiplications and additions.

The number of the multiplications and additions for each image location would be substantially reduced if the two-dimensional basis function of Figure 5 could be separated into one-dimensional basis functions aligned with the x and y axes of the image.

The basis function of Figure 5 is selected to be separable into one-dimensional basis functions that are aligned with the orthogonal axes of the basis function. In order to make the basis function separable with respect to the x and y axes of the image, the basis function is rotated, according to the invention, through the angle α to the position shown in Figure 6. The image is also rotated through the same angle α to enable correlation of the rotated basis function with the image to be equivalent to correlation of the original unrotated basis function with the original unrotated image.

The correlation at each image location for the separable basis functions in the rotated basis function now requires only 40+10 = 50 multiplications and additions. Whilst the rotation of the image will require some computation, the overall computation saving for many applications will be considerable.

## Claims

1. A method of matching a multidimensional basis function to a digital signal, the method comprising the steps of:
determining an angular orientation of the basis function relative to preset axes;
rotating the basis function into alignment with the preset axes; and correlating the rotated basis function with the signal.

2. A method as claimed in claim 1, wherein the multidimensional basis function is separable into one dimensional basis functions along the preset axes.

3. A method as claimed in claim 1 or 2, the method being applied to matching a multidimensional basis function to a digital signal representing an image, the method including the further step of processing the digital signal to rotate the image by the same amount as the multidimensional basis function.

4. A method as claimed in claim 1, 2 or 3, wherein the preset axes are co-ordinate axes.

5. A method of matching a multidimensional basis function to a digital signal representing an image, the multidimensional basis function being separable into one dimensional basis functions along co-ordinate axes which have been rotated through a predetermined angle to align them with co-ordinate axes of the image, the method comprising the steps of:
processing the digital signal to rotate the image through the said predetermined angle; and
correlating the one dimensional basis functions with the rotated image.
